**Europäisches Patentamt**

**European Patent Office**

**Office européen des brevets**

(11) Veröffentlichungsnummer: **0 168 642**
A2

## (12) EUROPÄISCHE PATENTANMELDUNG

(21) Anmeldenummer: **85107354.4**

(22) Anmeldetag: **14.06.85**

(51) Int. Cl.⁴: **G 11 B 23/50**

(30) Priorität: **19.06.84 DE 8418492 U**

(43) Veröffentlichungstag der Anmeldung: **22.01.86**
**Patentblatt 86/4**

(84) Benannte Vertragsstaaten: **AT BE CH DE FR GB IT LI LU NL SE**

(71) Anmelder: **Jonas, Konrad Hans, Hardtstrasse 138, D-4000 Düsseldorf 12 (DE)**

(72) Erfinder: **Jonas, Konrad Hans, Hardtstrasse 138, D-4000 Düsseldorf 12 (DE)**

(54) **Pflegeset für Compact-Disc-Schallplatten.**

(57)    Die Neuerung bezieht sich auf ein Pflegeset für Compact-Disc-Schallplatten.

In einem rechteckförmigen Behältnis werden die für die neuen Compact-Disc-Schallplatten anwendbaren Pflegemittel herausnehmbar untergebracht.

Das Behältnis ist in seinen Abmaßen derart auf Archivierungsvorrichtungen für Compact-Disc-Cassetten abgestimmt, so daß es dort abgelegt werden kann.

Das Behältnis weist ein oder mehrere Feld(er) auf, in dem bzw. denen die Pflegemittel eingelegt werden.

Als Pflegemittel kommen vorzugsweise Tücher, Bürsten und spezielle Reinigungsflüssigkeiten in entsprechenden Flaschen in Betracht.

Konrad Hans Jonas

4ooo Düsseldorf 12
Hardtstr. 138

B e s c h r e i b u n g

Pflegeset für Compact-Disc-Schallplatten

Die Neuerung bezieht sich auf ein Pflegeset für digital bespielte Compact-Disc-Schallplatten, von nun an Compact - Discs genannt.
Die neuen Compact-Discs werden am Markt ausschließlich in speziell hierfür hergestellten Aufbewahrungscassetten, von nun an CD-Cassetten genannt, angeboten.

Die Reinigung und Pflege von Compact-Discs erfolgt bisher mittels eines Tuches und ggf zusätzlich mittels eines Reinigungssprays.
Derartige Pflegemittel, von nun an CD-Pflegemittel genannt, werden vom Anwender meistens einzeln und voneinander ge - trennt aufbewahrt, oft verlegt und bei Bedarf nicht immer sofort zur Hand wiedergefunden.

Der Neuerung liegt deswegen die Aufgabe zugrunde, ein Pflegeset für Compact-Discs zu schaffen, in dem die wichtigsten CD-Pflegemittel in einem Aufbewahrungsbehältnis untergebracht sind.
Das Pflegeset für Compact-Discs, von nun an CD-Pflegeset genannt, soll durch seine äußere Form den Anwender zur geordneten Aufbewahrung, vorzugsweise im nahen Bereich seiner Compact-Disc-Sammlung anhalten.
Eine weitere Aufgabe für die im CD-Pflegeset enthaltenen CD-Pflegemittel besteht darin, daß kein loser Schmutz wie z.B. Staub in das Innere des Compact-Disc-Abspielgerätes fällt, das hierdurch ggf im Laufe der Zeit Schaden nehmen könnte .

2

Die gestellten Aufgaben werden auf folgende Weise gelöst.

Ein mit CD-Pflegemittel(n) gefülltes Behältnis, dessen
äußere Maße auf die Maße des Aufnahmeraumes einer CD-Cassettenaufbewahrungsvorrichtung wie z.B. entsprechende
Ständer, Regale, Kästen etc. abgestimmt sind, wird hauptsächlich im Bereich der Compact-Disc-Sammlung insbesondere in den vorstehend genannten CD-Cassettenaufbewah -
rungsvorrichtungen abgelegt.
Das Behältnis enthält die wichtigsten CD-Pflegemittel,
die die gestellten Aufgaben der Reinigung und Pflege erfüllen.

Die näheren Merkmale des CD-Pflegesets werden in den Ausführungen des Schutzanspruches 1 dargelegt und durch zusätzliche Maßnahmen in den darauffolgenden Schutzansprüchen ausgestaltet und weiterentwickelt.

Erläuterung und Beschreibung erfolgen anhand der Zeichnungen. So zeigt

Fig.  I   ein geöffnetes Behältnis mit Oberteil und Unterteil in perspektivischer Sicht,
Fig. II   ein geschlossenes Behältnis in perspektivischer
          Sicht,
Fig.III   ein geschlossenes Behältnis im Schnitt,
Fig. IV   ein Unterteil in Draufsicht mit eingelegtem Pflegemittel
Fig. V,   weitere Ausgestaltungsmöglichkeiten des Behältnis-
VI, VII   unterteiles  und

Fig.VIII eine Sonderform des Behältnisses .

Es wird Bezug auf Fig. I genommen.
Das Behältnis 3 besteht aus einem Oberteil 1 und einem Unterteil 2, die aufeinander zu setzen  bzw. zu stecken und
deckelartig zu öffnen sind. Sie können in einer anderen Ausführungsform auch mittels einer Gelenkvorrichtung miteinander verbunden sein und drehbar geöffnet werden.

3

Die äußeren Abmaße des geschlossenen Behältnisses werden in Fig. II dargestellt. Sie ermöglichen die Ablage des Behältnisses in CD-Cassettenaufbewahrungsvorrichtungen.

Die Außenseiten                    von Ober- 1 und Unterteil 2 sowie von den senkrecht hierzu verlaufenden Randstegen 34 bzw. der Außenränder 35 bestimmen die räumlichen äußeren Abmaße.

So liegt die

| äußere Länge | la vorzugsweise im Bereich von | 142 mm, |
| " Breite ba | " " " " | 125 mm, |
| " Höhe ha | " " " " | 1o,5 mm. |

Das Behältnis 3 ist somit auf die äußeren Abmaße der CD-Cassette abgestimmt. Die vorstehend genannten Maße können jedoch je nach Maß des Aufnahmeraumes einer CD-Cassettenaufbewahrungsvorrichtung variieren.

Fig. III zeigt im Schnitt den Innenraum 4 des geschlossenen Behältnisses 3, der von den Innenseiten der Großflächen       von Ober- 1 und Unterteil 2 sowie von den Innenseiten der senkrecht hierzu verlaufenden Randstegen 34 bzw. der Außenränder 35 begrenzt und zur Aufnahme von CD-Pflegemittel(n) ausgebildet ist.

Die Abmaße des Innenraumes 4 werden von den äußeren Abmassen Länge la, Breite ba und Höhe ha des geschlossenen Behältnisses minus der Wandstärken von Ober- 1 und Unterteil 2 sowie von den hierzu senkrecht verlaufenden Randstegen 34 bestimmt.

So liegt die

| innere Länge | li vorzugsweise im Bereich von | 139 mm, |
| " Breite bi | " " " " | 12o mm, |
| " Höhe hi | " " " " | 8 mm. |

Diese Maße können bei unterschiedlichen Wandstärken der Behältnisteile 1,2,34 variieren. Wünschenswert jedoch sind größtmögliche Werte für einen größtmöglichen Innenraum,

um entsprechende CD-Pflegemittel optimal ausgestalten und
unterbringen zu können.

Fig. IV zeigt in Draufsicht ein Unterteil 2 mit einem
beispielsweise als Textilstück 5o ausgebildeten CD-Pflegemittel, dessen Dicke im gefalteten Zustand die innere
Höhe hi des Innenraumes 4 nicht übersteigt.
Geeignet hierfür sind z.B. fusselfreie gewebte oder gewirkte Reinigungstücher oder Textilien in Samtstruktur,
die zusätzlich mit einer antistatisch wirkenden Substanz
imprägniert sein können.

Als weitere Ausgestaltungsmöglichkeit ist ebenfalls ein
Unterteil 2 denkbar, das durch einen oder mehrere Trennsteg(e) 8 wenigsten zwei zur Aufnahme von CD-Pflegemitteln ausgebildete Felder 9 aufweist.

So zeigt Fig. V in Draufsicht ein Unterteil 2 des Behältnisses 3 mit einem Trennsteg 8. In den hierdurch gebildeten zwei Feldern 9 ist beispielsweise je ein gefaltetes
Textilstück 5o und ein Reinigungsflüssigkeitsbehälter 6o
mit Verschlußvorrichtung 61 untergebracht, dessen äußere
stärkste Dicke das Maß der inneren Höhe hi des Innenraumes 4 nicht übersteigt.

Fig. VI zeigt in Draufsicht ein Unterteil 2 mit zwei Trennstegen 8. Die hierdurch ausgebildeten drei Felder 9 nehmen
jeweils ein CD-Pflegemittel auf wie z.B. ein Textilstück 5o
im gefalteten Zustand, ein Reinigungsflüssigkeitsbehälter
6o und einen Wischer 7o auf.

Der Wischer 7o ist ebenfalls derart ausgestaltet, daß weder seine Griffleiste 71 noch sein Wischmedium 72 dicker
als die innere Höhe hi des Innenraumes 4 ist. Die Länge
lw des Wischers sollte wenigstens 53 mm betragen, die der
Länge des Radius einer Compact-Disc entsprechen. Vorzugsweise jedoch findet eine längere Ausführung Anwendung, die den vom entsprechenden Feld 9 gebildeten Raum annähernd ausfüllt und somit fast den gesamten Durchmesser
einer Compact-Disc mit einem Wischvorgang abdeckt.

Das Wischmedium 72 besteht vorzugsweise aus weichem Material, das die Oberfläche der Compact-Disc nicht be -
schädigt. Hierzu eignen sich Samttextilien, die ggf zu
ihrer Stabilität auf einen Träger montiert oder um ihn
herum gelegt sind. Ein besonders vorteilhaftes Wischmedium 72 sind stabile und weiche Carbonfaser, die in einer metallenen Griffleiste gefasst evtl. vorhandene elektorstatische Aufladungen beim Wischvorgang von der Compact-Disc ableiten.


Bei einer weiteren Ausführungsform des Unterteils 2 kann
die Aufteilung des Innenraumes 4 in Felder 9  auch durch
Trennsteg(e) erfolgen, die längs  bzw. parallel zur Länge des Behältnisses verlaufen.
Die so bei einem mittig verlaufenden Trennstag 9 gebildeten zwei Felder 9 ergeben mehr Platz für das jeweilige
CD-Pflegemittel. Ein dort eingelegter Reinigungsflüssigkeitsbehälter kann durch diese räumliche Vorgabe größer
ausfallen und somit mehr Volumen an Reinigungsflüssigkeit aufnehmen.


Fig. VII zeigt in Draufsicht ein Unterteil 2 mit den
Trennstegen 8, drei jeweils mit einem CD-Pflegemittel
50,60,70 gefüllte Felder 9 und Randleisten 81,82, die
zusätzlich die Felder insbesondere an Stellen 36 , bei denen keine Randstege 34 vorhanden oder diese unterbrochen
sind, umgrenzen.

Trennstege 8 und Randleisten 81,82 können in Form eines
Einsatzes ausgebildet sein, der in das Unterteil 2 des
Behältnisses 3 eingelegt wird.

In einer besonderen Ausführung weisen die langen Randleisten 82 mindestens 1o mm breite Aussparungen 83 auf, die im

6

Abstand von 28 zbw. 18 mm vom jeweiligen Ende der Randleisten 82 liegen.

Fig. VIII zeigt in perspektivischer Sicht ein Behältnis 3,
das in Form einer CD-Cassette, aus der die Halterung für
die Compact-Disc entfernt wurde, ausgebildet ist.

Die Felder 9 enthalten jeweils ein CD-Pflegemittel 5o, 6o,
7o. Die Aussparungen 83 in den langen Randleisten 82 nehmen die Laschen 84 des Oberteils 1 bei geschlossenem Behältnis 3 auf.
Die langen Randleisten 82 können auch eine derart niedrige Höhe aufweisen, so daß sie den Laschen 84 beim geschlossenem Behältnis 3 nicht im Wege stehen. Die niedrige Höhe
liegt vorzugsweise im Bereich bis zu ca 4 mm und kann je
nach Wandstärken                        von Ober- 1 und Unterteil 2 variieren.
Die langen Randleisten 82 umgrenzen z.T. das sich über die
Mitte des Unterteils 2 erstreckende Feld 9 insbesondere
auch an den Stellen 36, an denen sie zur Entnahme der ansonsten eingelegten Compact-Disc unterbrochen sind.

Das Oberteil 1 des als CD-Cassette ausgebildeten Behältnisses 3 weist im Verlauf der Breite zwischen den Gelenkvorrichtungen 12 eine Aussparung 13 von ca 11 mm mal 118,5
mm auf. Dieser Freiraum kann durch eine entsprechende, ca
11 mm breite Randleiste 81 ausgefüllt werden, deren Höhe
bis zur Außenfläche des Oberteils 1 bei geschlossenem Behältnis 3 reicht.
Durch diese Maßnahme wird sowohl das Eindringen von Staub
in den Innenraum 4 des geschlossenen Behältnisses 3 als
auch die hierdurch mögliche Verschmutzung der CD-Pflegemittel insbesondere des Textilstückes 5o und des Wischers
7o vermieden.

Eine weitere Ausbildung des CD-Pflegesets sieht jedoch vor,
daß das unter der Aussparung 13 des Oberteils 1 liegende

7

Feld 9 von einem CD-Pflegemittel ausgefüllt wird. Hierzu ist besonders der Reinigungsflüssigkeitsbehälter 6o geeignet, der im Bereich des von der Aussparung 13 im Oberteil 1 gebildeten Freiraumes eine Vergrößerung seiner Dicke aufweist. Die Dicke des Reinigungsflüssigkeitsbehälters 6o und ggf seiner Verschlußvorrichtung 61 übersteigt somit an dieser Stelle die innere Höhe hi des Innenraumes 4 und endet vorzugsweise fluchtend mit der großflächigen Außenseite des geschlossenen Oberteils 1. Mittels dieser Ausgestaltungsform ist ebenfalls eine vorteilhaftere Anbringung der Verschlußvorrichtung 61 am Reinigungsflüssigkeitsbehälter 6o möglich, da der so gewonnene größere Freiraum die Konstruktion von Reinigungsflüssigkeitsbehälter 6o und seiner Verschlußvorrichtung 61 in diesem Bereich vereinfacht.

Der im Bereich zwischen den Gelenkvorrichtungen 12 verlaufende Rand 14 des Oberteils 1 weist eine zum Innenraum 4 gerichtete, hervorstehende Kante 15 auf. Dort wird die den Compact-Discs beigegebene zwischen der Großfläche des Oberteils 1 und dessen Laschen 84 geschobene Informations - schrift arretiert. Diese Kante 15 ist ca 2 mm hoch und reduziert an dieser sehr schmalen Stelle die innere Höhe hi des vom geschlossenen Behältnis gebildeten Innenraumes 4. Der Reinigungsflüssigkeitsbehälter weist somit in einer Weiterbildung an dieser Stelle eine nach innen gerichtete Rille 62 auf, die der Kante 15 den nötigen Freiraum zum Schließen des Behältnisses gibt.

Konrad Hans Jonas                    4000 Düsseldorf 30 0168642
                                     Hardtstr. 138

$$\gamma$$

S c h u t z a n s p r ü c h e
_____

1. Pflegeset für Compact-Disc-Schallplatten,
   dadurch gekennzeichnet,

   daß ein rechteckförmiges, aus einem Oberteil (1) und einem Unterteil (2) zusammenfügbares, deckelartig zu öffnendes Behältnis (3) vorgesehen ist, das in seiner äusseren Form zur Ablage auf die Aufnahmemaße einer CD-Cassettenaufbewahrungsvorrichtung abgestimmt ist und dessen
   äußere Abmaße

   Länge   (la) vorzugsweise im Bereich von  142   mm
   Breite  (ba)        "       "       "       "    125   mm
   Höhe    (ha)        "       "       "       "    1o,5  mm

   liegen,
   und daß im Behältnis (3) ein oder mehrere CD-Pflegemit -
   tel (5o,6o,7o), dessen bzw. deren Abmaße den freien In -
   nenraum (4) des geschlossenen Behältnisses (3) nicht
   übersteigen, herausnehmbar eingelegt sind.

2. Pflegeset für Compact-Disc-Schallplatten nach Anspruch 1,
   dadurch gekennzeichnet,

   daß als Pflegemittel ein Textilstück (5o) vorgesehen und
   derart ausgebildet ist, daß dessen Dicke im gefalteten
   Zustand die innere Höhe (hi) des vom geschlossenen Be -
   hältnis gebildeten Innenraumes (4) nicht übersteigt.

3. Pflegeset für Compact-Disc-Schallplatten nach einem der
   Ansprüche 1 und 2,
   dadurch gekennzeichnet,

   daß als Pflegemittel ein flacher Reinigungsflüssigkeitsbehälter (6o)  mit Verschlußvorrichtung (61) vorgesehen

9

und derart ausgebildet ist, daß dessen äußere Dicke die innere Höhe (hi) des vom geschlossenen Behältnis (3) gebildeten Innenraumes (4) nicht übersteigt.

4. Pflegeset für Compact-Disc-Schallplatten nach einem der Ansprüche 1 bis 3,
dadurch gekennzeichnet,

daß als Plegemittel ein flacher Wischer (7o) mit Griffleiste (71) und Wischmedium (72) vorgesehen und derart ausgebildet ist, daß die Dicke des Wischmediums (72) und/oder der Griffleiste (71) das Maß der inneren Höhe (hi) des vom geschlossenen Behältnis (3) gebildeten Innenraumes (4) nicht übersteigt.

5. Pflegeset für Compact-Disc-Schallplatten nach Anspruch 4,
dadurch gekennzeichnet,

daß der flache Wischer (7o) mindestens eine ca 53 mm lange, dem Radius einer Compact-Disc entsprechende Länge auf - weist.

6. Pflegeset für Compact-Disc-Schallplatten nach einem der Ansprüche 4 oder 5,
dadurch gekennzeichnet,

daß das Wischmedium (72) in Form eines Samtbesatzes ausgebildet ist.

7. Pflegeset für Compact-Disc-Schallplatten nach einem der Ansprüche 4 oder 5,
dadurch gekennzeichnet,

daß das Wischmedium (72) in Form von weichen und stabilen Carbonfasern ausgebildet ist, welche in einer metallenen Griffleiste (71) gehalten werden.

0168642

10

8. Pflegeset für Compact-Disc-Schallplatten nach einem der
   Ansprüche 1 bis 7,
   dadurch gekennzeichnet,

   daß der Innenraum (4) des Behältnisses (3) wenigstens
   einen Trennsteg (8) zur Bildung von wenigstens zwei Feldern (9) aufweist, die zur Aufnahme von Pflegemittel
   ausgebildet sind.


9. Pflegeset für Compact-Disc-Schallplatten nach Anspruch 8,
   dadurch gekennzeichnet,

   daß der Innenraum (4) des Behältnisses (3) Randleisten
   (81,82) zur zusätzlichen Umgrenzung der Felder (9) aufweist.


10. Pflegeset für Compact-Disc-Schallplatten nach einem der
    Ansprüche 8 oder 9,
    dadurch gekennzeichnet,

    daß Trennsteg(e) (8) und Randleiste(n) (81,82) als Einsatz im Behältnis (3) eingelegt bzw. angebracht sind.


11. Pflegeset für Compact-Disc-Schallplatten nach einem der
    Ansprüche 8 bis 1o,
    dadurch gekennzeichnet,

    daß die Abmaße der Pflegemittel (5o,6o,7o) in Länge und
    Breite den von den Trennsteg(en) und ggf zusätzlich von
    den Randleiste(n) (81,82)  gebildeten Feldern (9) annähernd entsprechen.


12. Pflegset für Compact-Disc-Schallplatten nach einem der
    Ansprüche 1 bis 11,
    dadurch gekennzeichnet,

    daß das Behältnis (3) in Form einer CD-Cassette (Fig.VIII)
    ausgebildet ist, aus der die  Compact-Disc-Halterung entfernt wurde.

**||**

13. Pflegeset für Compact-Disc-Schallplatten nach Anspruch 12,
dadurch gekennzeichnet,

daß die längs verlaufenden Randleisten (82) eine derart
niedrige Höhe aufweisen, daß sie den am Oberteil (1)
angebrachten Laschen (84) beim Schließen des Behältnisses (3) nicht im Wege stehen, oder
daß sie im Bereich zu den am gegenüberliegenden Oberteil
(1) angebrachten Laschen (84) Aussparungen (83) aufwei -
weisen, die die Laschen (84) beim Schließen des Behältnisses (3) aufnehmen.

14. Pflegeset für Compact-Disc-Schallplatten nach einem der
Ansprüche 12 oder 13,
dadruch gekennzeichnet,

daß die zwischen den Gelenkvorrichtungen (12) breitseits
verlaufende Randleiste (81) den von der im Oberteil (1)
befindlichen Aussparung (13) gebildeten Freiraum aus -
füllt und vorzugsweise mit der Außenfläche des Oberteils
(1) bei geschlossenem Behältnis (3) fluchtet.

15. Pflegeset für Compact-Disc-Schallplatten nach einem der
Ansprüche 12 oder 13,
dadurch gekennzeichnet,

daß ein Reinigungsflüssigkeitsbehälter (60) mit Ver -
schlußvorrichtung (61) im Bereich der im Oberteil (1)
befindlichen Aussparung (13) eine stärkere Dicke auf -
weist, den Freiraum ausfüllt und vorzugsweise mit der
Außenfläche des Oberteils (1) bei geschlossenen Behältnis (3) fluchtet.

16. Pflegeset für Compact-Disc-Schallplatten nach Anspruch 15,
dadurch gekennzeichnet,

daß der Reinigungsflüssigkeitsbehälter (60) im Verlauf
der Arretierungskante (15) des Oberteils (1) eine Rille
(62) aufweist, die der Arretierungskante (15) beim
Schließen des Behältnisses freien Raum läßt.

Fig. I

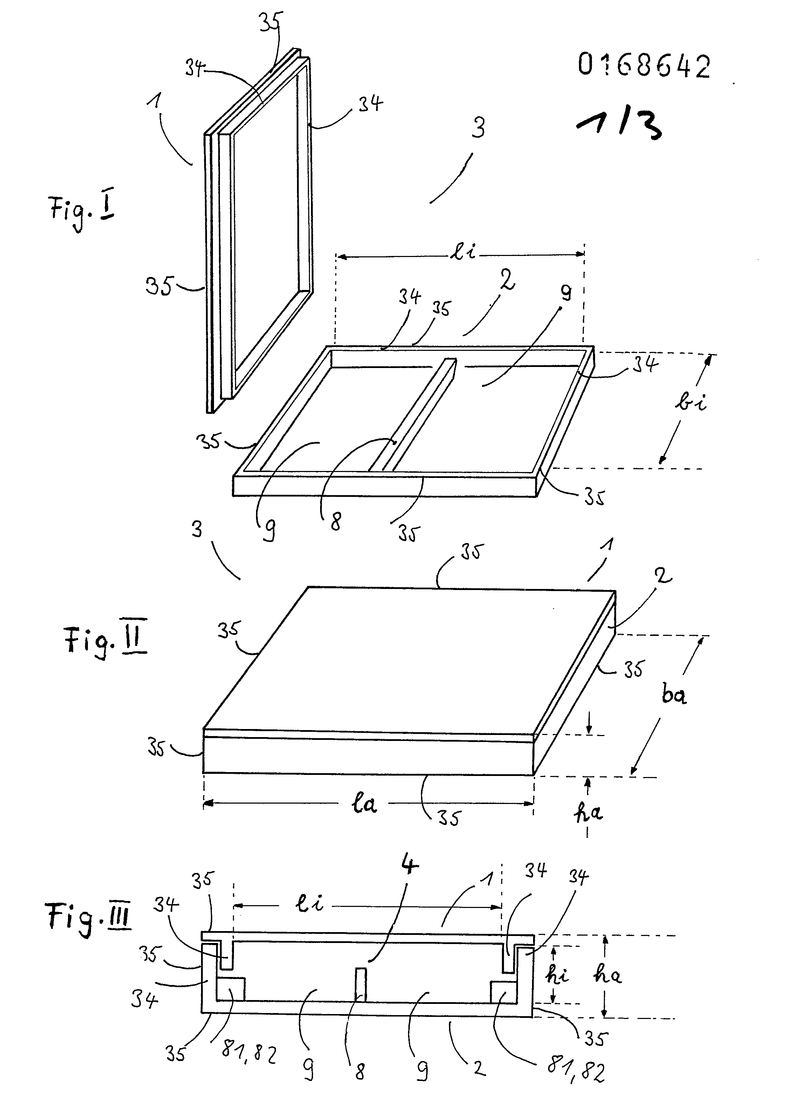

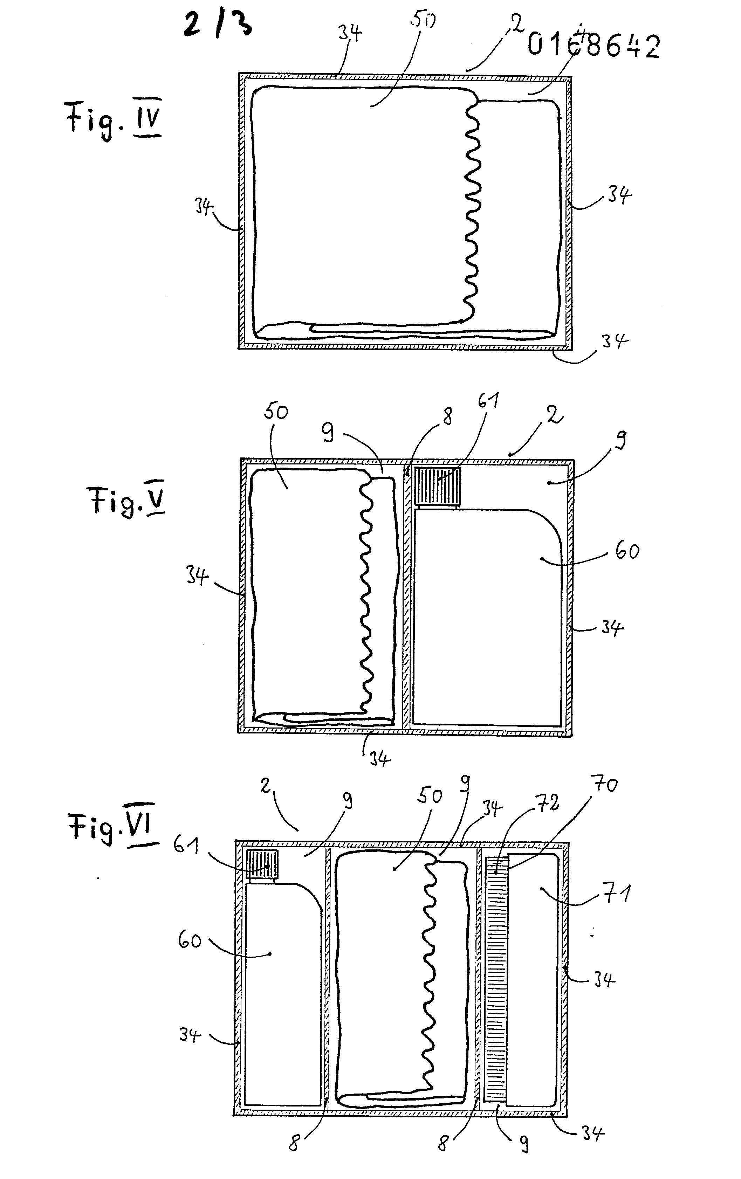

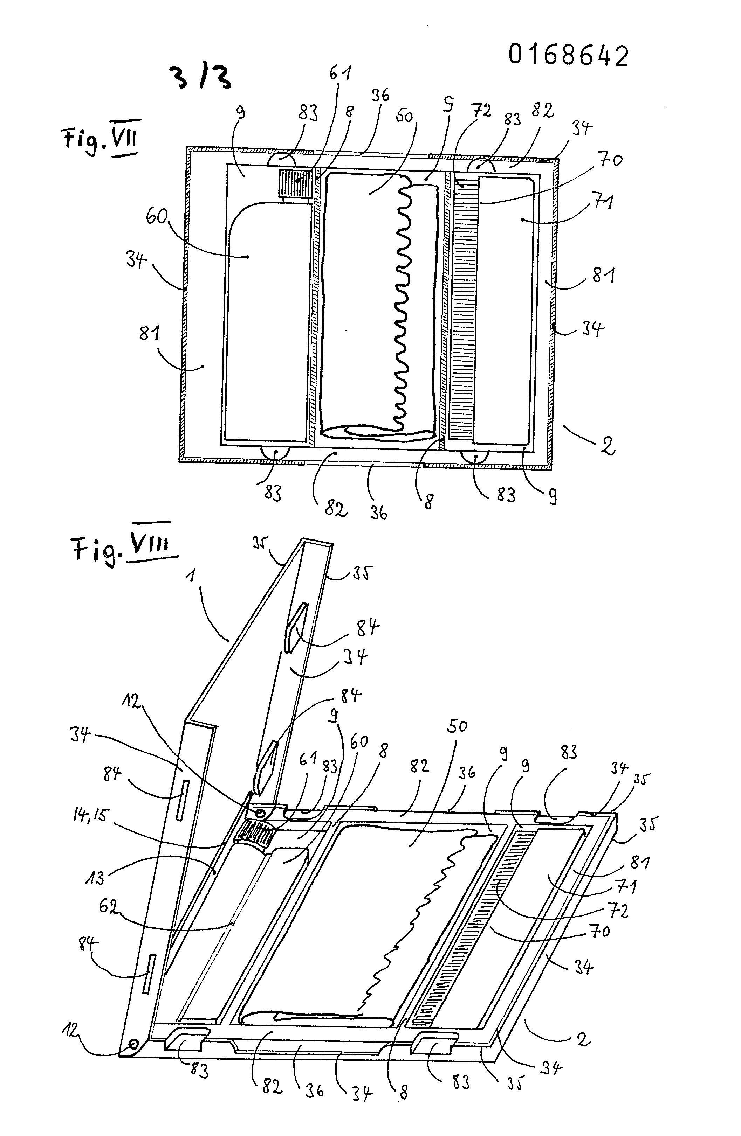

Fig. II

Fig. III

0168642

1/3

2 / 3

0168642

Fig. IV

Fig. V

Fig. VI

0168642

Fig. VII

Fig. VIII